# EUROPEAN PATENT SPECIFICATION

(11) **EP 1 700 625 B1**
(45) Date of publication and mention of the grant of the patent: **13.10.2010**
(21) Application number: 06001524.5
(22) Date of filing: 25.01.2006
(51) Int. Cl.: A63B 71/12, B32B 3/30, A41D 13/05

(54) **Protective element for body parts**
Schutzelemente für Körperteile
Element Protecteur pour des parties du corps

(30) Priority: 08.03.2005 DE 102005010614
(43) Date of publication of application: 13.09.2006
(73) Proprietor: adidas International Marketing B.V., 1062 KR Amsterdam (NL)
(72) Inventor: Nürnberg, Hans-Peter, 90579 Langenzenn (DE)
(74) Representative: Hess, Peter K. G.

(56) References cited:
- EP-A- 0 765 612
- DE-A1- 4 128 958
- DE-U1- 9 312 305
- US-A- 4 905 320
- US-A- 5 168 576
- US-A- 5 364 679
- US-A- 5 435 226
- US-A- 5 518 802
- US-B1- 6 418 832

## Description

### 1. Technical field

The present invention relates to a protective element, in particular a shinguard.

### 2. The prior art

In many fields of sports the body of an athlete has to be protected against injuries by suitable devices. For example when playing Icehockey or American Football the athletes wear helmets and thickly padded garments for protection in case of a heavy contact with other players or their sports equipment. Another example are shinguards for soccer players which serve to avoid injuries to the shin by the shoe and in particular the hard studs of an opposing player. Also injuries to the shins by particularly fierce ball shots are conceivable; a shin guard prevents them.

Shinguards of the prior art typically comprise one or more hard plastic plates and an attached cushioning material. Although such a construction generally provides sufficient protection, known shinguards are not without disadvantages. In particular, the plates limit the freedom of movement of a player. Furthermore, complex mounting structures are necessary to assure that the shinguard does not change its position during use, which even more hinders the player. As a result, many players play without the protection of a shinguard and prefer to take the risk of injuries.

Similar problems arise with other protective elements for athletes such as elbow and knee protectors for inline skaters or snowboarders which are rejected by many athletes for reasons of comfort since they, too, constrict the athlete's movement.

The US 5,518,802 discloses a cushioning structure for dampening shocks, which is, among others, useful to prevent injuries from falls. It includes one or more planar sheets of pliable material bonded to a matrix of polygon shape cells containing a fluid. The material is resilient in order to absorb impacts.

Compared to the design of protective sports devices, the construction of bullet-proof vests is a completely different technical field. The US 5,364,679 discloses a body armour made from several layers of (hemi-) spheres, wherein the surfaces of opposing spheres contact each other at certain points. As a result, the impact force of a bullet hitting the vest is distributed onto a plurality of spheres and the bullet is effectively stopped. The adoption of this design for protective sports elements for athletes would lead to a device having a great thickness and a significant weight. It would therefore not improve the wearing comfort of the device.

It is therefore the problem of the present invention to provide a protective element, in particular, a shinguard, which overcomes the above mentioned disadvantages of the prior art and which leads in particular to a higher wearing comfort and does not hinder the performance of the athlete.

### 3. Summary of the invention

The present invention solves this problem with a protective element, in particular a shinguard, comprising a first flexible support layer onto which a plurality of hard projections are arranged, a second flexible support layer onto which a plurality of hard receiving elements are arranged, wherein the receiving elements comprise sections having an essentially complementary shape to the projections and/or a sufficient distance from one another to provide recesses to receive the projections. The projections (20) can contact the receiving elements (40) but are not permanently connected to them.

The combination of flexible first and second support layers on the one hand and hard projections and receiving elements, respectively, on the other hand provides in accordance with the invention a protecting surface which can in contrast to the rigid plates of the prior art flexibly adapt to the contour of the part of the body to be protected. This allows an individual fit of the protective element. Furthermore, due to the flexibility of the support layers, the shape of the protective element can yield to movements of the body part to be protected, which increases the wearing comfort. This is in particular important, if joints are to be protected such as the elbow and the knee of an athlete.

The projections according to the invention and the recesses provided by the complementary shaped sections of the receiving elements and/or their arrangement lead to a comparatively reduced thickness of the resulting hard protecting layer.

Preferably, the projections have a rounded shape, in particular, they are dome-shaped and the sections of the receiving elements have a correspondingly rounded shape. Therefore, the rounded projections can slide within the rounded sections without jamming, when the flexible support layer is bent to adapt to the natural contour or to a movement of the body part. The protection provided by the hard layer made from the projections and the receiving elements of the protective element is not reduced in such a situation.

In a preferred embodiment, the receiving elements are arranged such that several receiving elements provide a recess to receive a single projection. A load applied to a certain area on the projection element, for example by a single stud, acting on the outside onto the protective element, is thereby distributed over a greater area and is thus dispersed. Preferably, four adjacent receiving elements form the recess for a single projection. Viewed from the body, the projections are preferably arranged on the outer support layer and the receiving elements on the inner layer of the protective element.

The projections are preferably separately arranged on the first support layer and the receiving elements are preferably separately arranged on the second support layer. Such an arrangement facilitates a change of the configuration of the two supporting elements to adapt to the contour of the part of the body to be protected.

The first and/or second flexible support layer preferably comprises a cloth. This allows to easily integrate the protective element according to the invention into a garment, such as the sock of a soccer player.

In a particularly preferred embodiment, the first and/or second support layer additionally comprises a cushioning layer, wherein the cushioning layer comprises a plurality of plastic fibres, arranged between two fabrics and extending essentially perpendicular to the plane of the two fabrics. Such a layer design, which is also designated as "3D-mesh" allows to permanently provide good cushioning properties at a low weight and good ventilation properties. Contrary to common foamed materials, a 3D-mesh is permeable for an air flow through and within the mesh. Alternatively, it is also conceivable to use a layer of foamed material or any other material that provides cushioning.

Finally, the present invention relates to a shinguard or an article of clothing comprising at least one of the above explained protective elements.

### 4. Short description of the accompanying figures

In the following, aspects of the present invention are further described with reference to the accompanying figures. These figures show:
- Fig. 1a:: A schematic cross-section of a first embodiment of the present invention;
- Fig. 1b:: a schematic cross-section of another embodiment of the present invention;
- Fig. 2:: a schematic cross-section of a further embodiment of the present invention;
- Fig. 3:: a schematic top view of the receiving elements in the embodiment of Fig. 2; and
- Fig. 4:: a schematic cross-section of a 3D-mesh as it is preferably used in conjunction with the present invention.

### 5. Detailed description of the preferred embodiments

In the following, presently preferred embodiments of the present invention are further described with reference to a layer ensemble of a shinguard for a soccer player. However, it is to be understood that the present invention can also be used for a variety of other kinds of protection devices for athletes, such as protective elements for elbows and knees to be used by inline skaters, skateboarders and snowboarders. Other applications are various protective elements for hockey players, in particular the goalkeeper, but also for motor-cyclists or downhill mountain bikers. Another important field of application are protective elements for the shoulders for use in Rugby or American Football. The protective element can be integrated directly into an article of clothing or be arranged in a corresponding pocket. Also mixed designs are possible wherein only parts, e.g. a support layer, are integrated into the fabric of the article of clothing and wherein the other components are detachable.

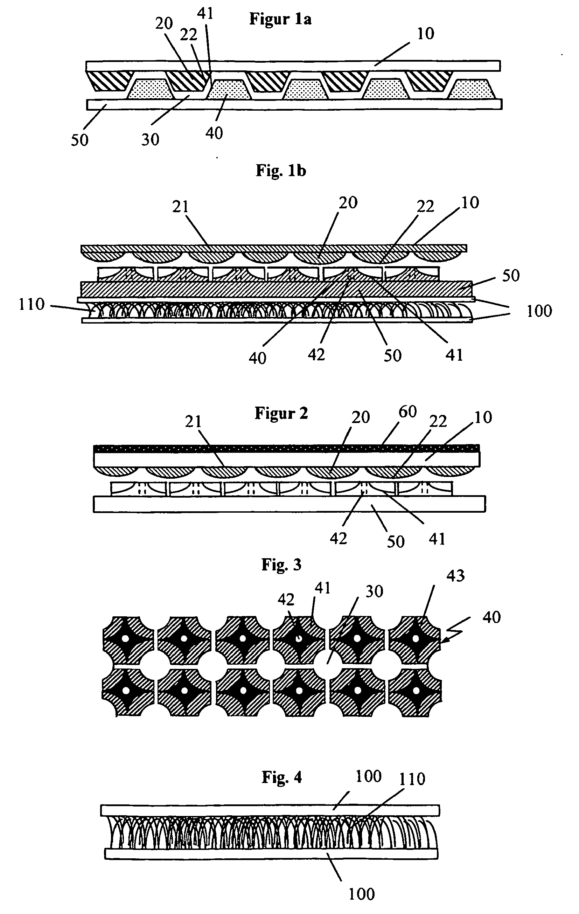

Fig. 1a schematically illustrates the general design of a first embodiment. A plurality of projections 20 are attached to a first support layer 10, for example a suitable fabric or a sufficiently stable foil. Preferably, the support layer 10 is directed to the outside, when the shinguard is in use, so that the projections 20 are inwardly oriented in the direction of the part of the body to be protected (not shown). The projections extend into recesses 30, which are preferably formed by several receiving elements 40. The receiving elements 40 are in turn attached to a further support layer 50.

Fig. 1b discloses a further embodiment, wherein the projections 20 and their support layer 10 are provided as a single, preferably injection-moulded piece. Similarly, the receiving elements 40 can be integrally manufactured together with the further support layer 50, again preferably by injection moulding. Manufacturing the projections 20 and the receiving elements 40 together with the respective support layer 10, 50, significantly reduces manufacturing costs. Preferably, the integrally provided support layers 10 and 50 are sufficiently thin and / or made from a sufficiently flexible material so that the shape of the overall protective element can adapt to the outer contour of the shin (not shown).

The embodiment of Fig. 1b comprises additionally a so called 3D-mesh cushioning layer 100, 110, underneath the lower support layer 50, which will be described in detail below with reference to Fig. 4 showing such a 3D-mesh in more detail. Furthermore, there might be one or more further cushioning layer(s) (not shown) below or above the support layers 50 and 10, made for example from a comparatively soft foamed material such as EVA.

In order to avoid that the layer stack shown in Fig. 1a or Fig. 1b disintegrates, the various layers are preferably stitched together along the outer edge of the shinguard. As mentioned before, such a protecting layer ensemble can be integrated into the fabric of a garment or arranged in a suitable pocket of a shinguard (not shown).

In both embodiments of Fig. 1a and Fig. 1b, when the projections 20 are positioned in the recesses 30, they form together with the receiving elements 40 a preferably substantially closed, hard layer which can not be penetrated by an impinging outer device such as a pointed stud. As a result, the part of the body (not shown) arranged below the layer is protected. The projections 20 and the receiving elements 40 have preferably sections with an essentially complementary shape, for example the essentially parallel side-surfaces 22 and 41 shown in Fig. 1a or the round projections and the round recesses in Fig. 1b so that they can engage each other. Alternatively or additionally, it is also conceivable to arrange the receiving elements at a sufficient distance from one another on the support layer 50.

In order to provide the desired protection, the projections 20 are made from a sufficiently hard material. The exact degree of hardness of the used material depends on the loads to be expected.

Since the projections 20 only contact the receiving elements 40 but are not permanently connected to them, the layer ensembles shown in Fig. 1a and Fig. 1b can also have a curved shape, if necessary, to match the contour or a movement of the part of the body to be protected.

Using suitable methods, the projections 20 and the receiving elements 40 of Fig. 1a are anchored to the support layers 10, 50, respectively. In addition to stitching, gluing or similar methods, it has been found to be particularly advantageous, if the plastic material of the projections 20 and receiving elements 40 is directly moulded, injection moulded or flow moulded onto a support layer. This is, since this process can be easily automated. Thermoplastic polyurethane (TPU) or polyolefins such as e.g. acryl butadiene styrole (ABS) is preferably used as a plastic material. The individual projections 20 and the receiving elements 40 are preferably separately arranged on the support layers. However, an arrangement as shown in Fig. 1b, wherein the individual projections 20 and the receiving elements 40 are integrally manufactured together with their respective support layers 10, 50 is also conceivable.

Furthermore, it is also possible to provide interconnecting ridges (not shown) between individual projections or receiving elements 40, respectively. Using such interconnecting ridges allows to selectively modify the possibilities of change in the configuration of the protective element. For example, in case of a shinguard it is conceivable to provide rows of projections and/or rows of receiving elements, by arranging interconnecting ridges between the projections or the receiving elements of a row extending in longitudinal direction of the shinguard. Such a shinguard can still be flexibly adapted to the individual curvature of the shin. In longitudinal direction, however, it is essentially rigid.

Figures 2 and 3 disclose a further, presently preferred embodiment. Similar to the embodiment of Fig. 1b, the projections 20 have a rounded shape in this embodiment, which is preferably dome-shaped. The recesses 30 are each formed by four receiving elements 40 having correspondingly rounded side surfaces 41 which can be engaged by the rounded projections 20. However, also other shapes are conceivable for the projections 20, e.g. hexagonal shapes, ellipses, triangles, quad-rates, or other shapes, even asymmetric ones (not shown). Then, the receiving elements 40 have a corresponding shape and/or a corresponding distance to also provide an area of contact to the projections in these embodiments and thus to achieve the explained protective effect.

Fig. 2 shows a section through the layer ensemble, wherein the support layer 10 and the support layer 50 are arranged with a distance, so that the individual projections 20 and the receiving elements 40 can be recognised separately from each other. As mentioned before, the two support layers 10, 50 are in the final shinguard preferably interconnected at their side edges, for example by stitching, gluing or welding. However, such a connection is not necessary.

Due to the rounded shape of the projections 20 and recesses 30 formed by the receiving elements 40, the embodiments of Fig. 1b and Fig. 2 can more easily be bent than the embodiment of Fig. 1a. A jamming of some projections 20 and receiving elements 40 is excluded.

The top view in Fig. 3 illustrates that the recess 30, which receives a projection being dome-shaped, is preferably provided by four adjacent receiving elements 40. As a result, an impact force exerted onto a certain point of the flat outer surface 21 of the projection 20, for example by a pointed stud, is distributed over the overall surface of the four receiving elements 40 and therefore has a lesser impact on the part of the body which is arranged below (not shown).

Apart from the rounded side surfaces 41, each receiving element 40 comprises in the embodiment of Fig. 3 a star-like central area 43. For reducing the weight, a hole may be arranged in the center of this part. In a similar manner the central region of the recess 30 could be free from material. This is, since it is sufficient if the round projection 20 is maintained in its central position between the four receiving elements 40 by the rounded side surfaces 41. This leads to a reduced thickness of the overall layer ensemble and to a lower weight. In other embodiments the recess 30 is not free from material.

As a result, the overall layer ensemble according to the present embodiment can be directly integrated into a suitable garment. To this end, the support layer 10 and/or 50 may be part of the cloth for a sock, trousers and/or a jacket. Since the projections 20 engage the recesses 30, a comparatively thin hard layer is achieved which is preferably less bulky than a shinguard according to the prior art. Alternatively, an insert with the layer ensemble shown in Figures 1 to 3 could be inserted into a pocket or the like of a garment, such as a sock. In addition, it is also conceivable to wind the flexible layer material of Figures 1a to 3 like a bandage around the part of the body to be protected.

To avoid a premature wear of the outer support layer 10, an additional coating 60 may be arranged on its outer side (cf. Fig. 2), which may for example consist of suitable rubber ribs. In the case of a shinguard, the rubber coating 60 provides a better control of the ball in addition to protection against wear and tear in a situation where it is necessary to contact the ball with the shin. Also in case of other protective elements, as they are in an exemplary manner mentioned above, the additional coating 60 may have advantages. The coating 60 can similar to the projections 20 and the receiving elements 40 be directly moulded onto the support layer 10. Alternatively, it is also possible to directly interconnect the coating 60 and the outside 21 of a projection 20 for example by gluing and/or welding through the support layer 10 (not shown). It is also conceivable to injection mould the additional coating 60 together with the injection moulding of the projections 20 and / or the support layer 10, to further facilitate production.

On the one hand, the arrangement shown in Figures 1a to 3 serves to avoid the penetration of a pointed device into the part of the body to be protected and, on the other hand, to disperse the hitting shock over a broader surface. For a shinguard but also for other protective elements it is additionally preferable to provide a cushioning layer cushioning the arising impact by a suitable deformation. To this end, an appropriate cushioning material is preferably arranged in the region of the support layer 10 and/or the support layer 50, made for example from a foamed material such as an EVA-foam.

Fig. 4 presents a presently particularly preferred cushioning material. A plurality of plastic fibres 110 is arranged between two fabric layers 100 and extends essentially perpendicularly to the plane of the two fabric layers 100. When such a cushioning material, which is commonly known as 3D-mesh, is compressed, i.e. when the two fabric layers 100 are moved in the direction of each other, the plurality of plastic fibres 110 must be bent and frictionally pass each other. As a result, the compression movement is effectively cushioned, since the fibres are elastic and try to return to their original configuration.

Such a cushioning material is very long-lasting and therefore particularly suitable to be used in conjunction with the layer ensemble of Figures 1a to 3. One of the two fabrics 100 may simultaneously provide the function of one of the two support layers 10 or 50 so that the resulting layer ensemble (not shown) provides a protecting function as well as a cushioning function. As already explained, a further advantage of the use of a 3D-mesh are the good ventilation properties provided by this material. Contrary to common cushioning materials, such as e.g. rubber foams, a flow of air can easily pass through a 3D-mesh in all directions. This advantage is very important, in particular for protective elements integrated into articles of clothing for athletes.

Protective elements which are subjected to particularly high loads may comprise a combination of several protection layers comprising outer projections 20 and correspondingly shaped receiving elements 40 with the discussed cushioning material. The explained cushioning material can for example be arranged between two hard protection layers (not shown), wherein the upper fabric layer 100 is the lower support layer of the upper protection layer and wherein the lower fabric layer 100 is the upper support layer of the lower protection layer. If used in a shinguard, such a design leads to a particularly safe protection against penetration of the pointed studs of an opposing player.

## Claims

1. Protective sports element, in particular a shinguard, comprising:
a. a first flexible support layer (10), wherein a plurality of projections (20) is arranged on the first support layer (10);
b. a second flexible support layer (50), wherein a plurality of receiving elements (40) is arranged on the second support layer (50), wherein
c. the receiving elements (40) comprise sections (41) having an essentially complementary shape to the projections (20) and/or a sufficient distance from one another to provide recesses (30) to receive the projections (20),
d. the projections (20) and the receiving elements (40) are made from a hard material and
**characterized in that**
e. the projections (20) can contact the receiving elements (40) but are not permanently connected to them.

2. Protective sports element according to claim 1, wherein the projections (20) have a rounded shape and wherein the sections (41) of the receiving elements (40) have a correspondingly rounded shape.

3. Protective sports element according to claim 2, wherein the projections (20) are dome-shaped.

4. Protective sports element according to one of the preceding claims, wherein the receiving elements (40) are arranged such that several receiving elements (40) form a recess (30) to receive a projection (20).

5. Protective sports element according to claim 4, wherein four adjacent receiving elements (40) form a recess (30) to receive a projection (20).

6. Protective sports element according to one of the preceding claims, wherein the projections (20) and/or the receiving elements (40) are made from an essentially incompressible plastic material.

7. Protective sports element according to one of the preceding claims, wherein, as viewed from the body, the projections (20) are arranged on the outer support layer and wherein the receiving elements (40) are arranged on the inner support layer of the protective sports element.

8. Protective sports element according to one of the preceding claims, wherein the first (10) and the second flexible support element (50) are arranged such that the projections (20) are essentially arranged in the recesses (30).

9. Protective sports element according to one of the preceding claims, wherein the projections (20) are arranged separately from each other on the first support layer (10).

10. Protective sports element according to one of the preceding claims, wherein the receiving elements (40) are arranged separately from each other on the second support layer (50).

11. Protective sports element according to one of the preceding claims 1 - 9, wherein interconnecting ridges are arranged between adjacent projections (20) and/or adjacent receiving elements (40).

12. Protective sports element according to one of the preceding claims, wherein the first (10) and/or the second support layer (50) comprise a cloth.

13. Protective sports element according to one of the preceding claims, wherein the first (10) and/or the second support layer (50) additionally comprise a cushioning layer (100, 110, 100).

14. Protective sports element according to claim 13, wherein the cushioning layer comprises a plurality of plastic fibres (110) arranged between two fabrics (100), the fibres extending essentially perpendicular to the plane of the two fabrics.

15. Protective sports element according to one of the preceding claims, wherein an additional coating (60) is arranged on an outer surface of the protective sports element.

16. Shinguard comprising at least one protective sports element according to one of the claims 1 - 15.

17. Article of clothing comprising at least one protective sports element according to one of the claims 1 - 15.

18. Article of clothing having a pocket, in which at least one protective sports element according to one of the claims 1 - 15 is arranged.

19. Article of clothing according to one of the claims 17 or 18, wherein at least one of the support layers (10, 50) is integral with the fabric of the clothing.

## Patentansprüche

1. Schützende Sporteinrichtung, insbesondere Schienbeinschützer, mit:
a. einer ersten flexiblen Trägerschicht (10), auf der eine Mehrzahl von Vorsprüngen (20) angeordnet ist;
b. einer zweiten flexiblen Trägerschicht (50), wobei eine Mehrzahl harter Aufnahmeelemente (40) auf der zweiten Trägerschicht (50) angeordnet ist, wobei
c. die Aufnahmeelemente (40) Bereiche (41) mit zu den Vorsprüngen (20) im Wesentlichen komplementärer Form und / oder einen hinreichenden Abstand voneinander aufweisen, um Vertiefungen (30) für die Aufnahme der Vorsprünge (20) bereitzustellen,
d. wobei die Vorsprünge (20) und die Aufnahmeelemente (40) aus einem harten Material gefertigt werden;
**dadurch gekennzeichnet, dass**
e. die Vorsprünge (20) die Aufnahmeelemente (40) nur berühren können, aber nicht dauerhaft mit ihnen verbunden sind.

2. Schützende Sporteinrichtung nach Anspruch 1, wobei die Vorsprünge (20) eine abgerundete Form aufweisen und die Bereiche (41) der Aufnahmeelemente (40) eine entsprechend abgerundete Form aufweisen.

3. Schützende Sporteinrichtung nach Anspruch 2, wobei die Vorsprünge (20) die Form einer Kugelkappe aufweisen.

4. Schützende Sporteinrichtung nach einem der vorhergehenden Ansprüche, wobei die Aufnahmeelemente (40) so angeordnet sind, dass jeweils mehrere Aufnahmeelemente (40) eine Vertiefung (30) für die Aufnahme eines Vorsprungs (20) bilden.

5. Schützende Sporteinrichtung nach Anspruch 4, wobei jeweils vier benachbarte Aufnahmeelemente (40) die Vertiefung (30) für einen Vorsprung (20) bilden.

6. Schützende Sporteinrichtung nach einem der vorhergehenden Ansprüche, wobei die Vorsprünge (20) und / oder die Aufnahmeelemente (40) aus einem im Wesentlichen inkompressiblen Kunststoff gefertigt werden.

7. Schützende Spoiieiiwichtung nach einem der vorhergehenden Ansprüche, wobei die Vorsprünge (20) auf der vom Körper aus äußeren Trägerschicht und die Aufnahmeelemente (40) auf der vom Körper aus inneren Trägerschicht der Sporteinrichtung angeordnet sind.

8. Schützende Spoiteinrichtung nach einem der vorhergehenden Ansprüche, wobei die erste (10) und das zweite flexible Trägerelement (50) so miteinander verbunden sind, dass sich die Vorsprünge (20) im Wesentlichen in den Vertiefungen (30) befinden.

9. Schützende Sporteinrichtung nach einem der vorhergehenden Ansprüche, wobei die Vorsprünge (20) separat voneinander an der ersten Trägerschicht (10) angeordnet sind.

10. Schützende Sporteinrichtung nach einem der vorhergehenden Ansprüche, wobei die Aufnahmeelemente (40) separat voneinander an der zweiten Trägerschicht (50) angeordnet sind.

11. Schützende Sporteinrichtung nach einem der vorhergehenden Ansprüche 1 - 9, wobei verbindende Stege zwischen benachbarten Vorsprüngen (20) und / oder benachbarten Aufnahmeelementen (40) angeordnet sind.

12. Schützende Sporteinrichtung nach einem der vorhergehenden Ansprüche, wobei die erste (10) und / oder die zweite Trägerschicht (50) einen Stoff umfassen.

13. Schützende Sporteinrichtung nach einem der vorhergehenden Ansprüche, wobei die erste (10) und / oder die zweite Trägerschicht (50) zusätzlich eine Dämpfungsschicht (100, 110, 100) umfasst.

14. Schützende Spouteinrichtung nach Anspruch 13, wobei die Dämpfungsschicht eine Vielzahl von Kunststofffasern (110) umfasst, die zwischen zwei Geweben (100) angeordnet sind und sich im Wesentlichen senkrecht zur Ebene der beiden Gewebe (100) erstrecken.

15. Schützende Sporteinrichtung nach einem der vorhergehenden Ansprüche, wobei eine zusätzliche Beschichtung (60) auf einer äußeren Oberfläche der schützenden Sporteinrichtung angeordnet ist.

16. Schienbeinschützer in Form einer schützenden Sporteinrichtung nach einem der Ansprüche 1 - 15.

17. Bekleidungsstück mit zumindest einer schützenden Sporteinrichtung nach einem der Ansprüche 1 - 15.

18. Bekleidungsstück mit einer Tasche, in der zumindest eine schützende Sporteinrichtung nach einem der Ansprüche 1 - 15 angeordnet ist.

19. Bekleidungsstück nach einem der Ansprüche 17 oder 18, bei dem zumindest eine der Trägerschichten (10, 50) integraler Bestandteil des Gewebes des Bekleidungsstücks ist.

## Revendications

1. Élément de protection pour les sports, en particulier protège-tibia, comprenant :
a. une première couche support flexible (10), où une pluralité de saillies (20) est disposée sur la première couche support (10) ;
b. une seconde couche support flexible (50), où une pluralité d'éléments de réception (40) est disposée sur la seconde couche support (50), où
c. les éléments de réception (40) comprennent des parties (41) qui ont une forme essentiellement complémentaire des saillies (20) et/ou une distance suffisante les uns des autres pour former des évidements (30) pour recevoir les saillies (20),
d. les saillies (20) et les éléments de réception (40) sont réalisés en un matériau dur et
**caractérisé en ce que**
e. les saillies (20) peuvent venir en contact avec les éléments de réception (40) mais ne sont pas reliées en permanence à ceux-ci.

2. Élément de protection pour le sport selon la revendication 1, dans lequel les saillies (20) présentent une forme arrondie et dans lequel les parties (41) des éléments récepteurs (40) présentent une forme arrondie correspondante.

3. Élément de protection pour le sport selon la revendication 2, dans lequel les saillies sont en forme de dômes.

4. Élément de protection pour le sport selon l'une des revendications précédentes, dans lequel les éléments récepteurs (40) sont disposés de sorte que plusieurs éléments récepteurs (40) forment un évidement (30) pour recevoir une saillie (20).

5. Élément de protection pour le sport selon la revendication 4, dans lequel les quatre éléments récepteurs adjacents (40) forment un évidement (30) pour recevoir une saillie (20).

6. Élément de protection pour le sport selon l'une des revendications précédentes, dans lequel les saillies (20) et/ou les éléments de réception (40) sont réalisés à partir d'un matériau plastique essentiellement incompressible.

7. Élément de protection pour le sport selon l'une des revendications précédentes, dans lequel, vues depuis le corps, les saillies (20) sont disposées sur la couche support extérieure et dans lequel les éléments récepteurs (40) sont disposés sur la couche support intérieure de l'élément de protection pour le sport.

8. Élément de protection pour le sport selon l'une des revendications précédentes, dans lequel le premier (10) et le second élément support flexible (50) sont disposés de sorte que les saillies (20) soient essentiellement disposées dans les évidements (30).

9. Élément de protection pour le sport selon l'une des revendications précédentes, dans lequel les saillies (20) sont disposées séparément l'une de l'autre sur la première couche support (10).

10. Élément de protection pour le sport selon l'une des revendications précédentes, dans lequel les éléments de réception (40) sont disposés séparément les uns des autres sur la seconde couche support (50).

11. Élément de protection pour le sport selon l'une des revendications précédentes 1 à 9, dans lequel des nervures d'interconnexion sont disposées entre des saillies adjacentes (20) et/ou des éléments récepteurs adjacents (40).

12. Élément de protection pour le sport selon l'une des revendications précédentes, dans lequel la première (10) et/ou la seconde couche support (50) comprennent un tissu.

13. Élément de protection pour le sport selon l'une des revendications précédentes, dans lequel la première (10) et/ou la seconde couche support (50) comprennent en plus une couche d'amortissement (100, 110, 100).

14. Élément de protection pour le sport selon la revendication 13, dans lequel la couche d'amortissement comprend une pluralité de fibres plastiques (110) disposées entre deux tissus (100), les fibres s'étendant essentiellement perpendiculaires au plan des deux tissus.

15. Élément de protection pour le sport selon l'une des revendications précédentes, dans lequel un revêtement additionnel (60) est disposé sur une surface extérieure de l'élément protecteur pour le sport.

16. Protège-tibia comprenant au moins un élément de protection pour le sport selon l'une des revendications 1 à 15.

17. Article d'habillement comprenant au moins un élément de protection pour le sport selon l'une des revendications 1 à 15.

18. Article d'habillement possédant une poche, où est disposé au moins un élément de protection pour le sport selon l'une des revendications 1 à 15.

19. Article d'habillement selon l'une des revendications 17 à 18, dans lequel au moins l'une des couches support (10, 50) est faite d'une seule pièce avec le tissu du vêtement.
